(19) Europäisches Patentamt / European Patent Office / Office européen des brevets

(11) **EP 3 471 053 B1**

(12) **EUROPEAN PATENT SPECIFICATION**

(45) Date of publication and mention
of the grant of the patent:
**08.07.2020  Bulletin 2020/28**

(51) Int Cl.:
*G06T 3/00* *(2006.01)*          *G06T 15/20* *(2011.01)*
*G01C 21/26* *(2006.01)*

(21) Application number: **18202696.3**

(22) Date of filing: **27.05.2008**

(54) **RENDERING, VIEWING AND ANNOTATING PANORAMIC IMAGES, AND APPLICATIONS THEREOF**

DARSTELLUNG, ANSICHT UND ANNOTATION VON PANORAMABILDERN UND ANWENDUNGEN DAVON

RENDU, VISUALISATION ET ANNOTATION D'IMAGES PANORAMIQUES ET LEURS APPLICATIONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.05.2007  US 75426507**
**25.05.2007  US 75426707**
**25.05.2007  US 75426607**

(43) Date of publication of application:
**17.04.2019  Bulletin 2019/16**

(62) Document number(s) of the earlier application(s) in accordance with Art. 76 EPC:
**08754734.5 / 2 171 690**

(73) Proprietor: **Google LLC**
**Mountain View, CA 94043 (US)**

(72) Inventors:
• **VINCENT, Luc**
**Palo Alto, CA California 94306 (US)**
• **FILIP, Daniel**
**San Jose, CA California 95112 (US)**
• **CHAU, Stephen**
**San Francisco, CA California 94131 (US)**
• **LAFON, Stephane**
**Sunnyvale, CA California 94086 (US)**
• **YANG, Zhonghao**
**Sunnyvale, CA California 94086 (US)**
• **SZYBALSKI, Andrew, Timothy**
**Mountain View, CA California 94041 (US)**

(74) Representative: **Smith, Jeremy Robert et al**
**Kilburn & Strode LLP**
**Lacon London**
**84 Theobalds Road**
**London WC1X 8NL (GB)**

(56) References cited:
**EP-A2- 0 930 584          EP-A2- 1 612 707**
**WO-A1-2006/053271**

**Description**

FIELD OF THE INVENTION

The present invention generally relates to panoramic imagery.

BACKGROUND

Computerized mapping systems traditionally provide a top-down presentation of the mapping data. Enhancing the mapping system with street-level imagery presents various interface challenges: such as dealing with navigation within the street-level view, including turning at intersections, and correlating the user's location and orientation on a map with the user's location and orientation within the street-level view, both in absolute terms (e.g., latitude, longitude, and heading) and relative to landmarks like city streets and intersections. Recently, A9 BlockView (no longer online) and Windows Live Local Technology Preview powered by Microsoft Virtual Earth (http://preview.local.live.com) have attempted to provide a usable interface to street-level views of a city. A9 Block-View addressed the orientation problem by flattening imagery into two strips, so that the user does not have the freedom to look around 360 degrees. Windows Live Local presents a "car" view of street-level imagery which is rotated in 90 degree increments by manipulating a car avatar on the map view.

WO 2006/053271 A1 discloses a method and system for creating a transition between a first scene and a second scene on a computer system display, simulating motion. The method includes determining a transformation that maps the first scene into the second scene. Motion between the scenes is simulated by displaying transitional images that include a transitional scene based on a transitional obj ect in the first scene and in the second scene.

BRIEF SUMMARY OF THE INVENTION

Aspects of the present invention are set out in the independent claims. In a first embodiment, a method may be used to view panoramic images. The method includes: receiving at least a portion of a first panoramic image and presenting a viewport that displays the portion of the first panoramic image. The viewport includes a three-dimensional overlay rendered with the first panoramic image. The three-dimensional overlay's orientation is changed in three-dimensional space as it is rendered with the first panoramic image so as to match a change in orientation of the first panoramic image.

In a second embodiment, a system may be used for viewing panoramic images. The system includes a panorama viewer that receives at least a portion of a first panoramic image and presents a viewport that displays the portion of the first panoramic image. The viewport includes a three-dimensional overlay rendered with the panoramic image. The panorama viewer changes the three-dimensional overlay's orientation in three-dimensional space as it is rendered with the panoramic image so as to match a change in orientation of the panoramic image within the viewport.

In a third embodiment, a method may be used to render a surface. The method includes: computing a region on the surface defined by a first transformation from a viewport to the surface; computing a second transformation that maps from the region to the viewport; and determining a portion of an image which intersects with the region. Finally, the second transformation is applied to the portion of the image which intersects with the region, resulting in a transformed image. The transformed image is rendered in the viewport for display.

In a fourth embodiment, a system renders a surface. The system includes a server that computes a region on the surface defined by a first transformation from a viewport to the surface. The server also computes a second transformation that maps from the region to the viewport. The system further includes a panorama viewer that determines a portion of an image which intersects with the region on the surface. The panorama viewer applies the second transformation to the portion of the image intersecting with the region on the surface, resulting in a transformed image. The transformed image is rendered in the viewport for display.

In a fifth embodiment, a method may be used to process annotations for panoramas. The method includes: receiving a first user annotation for a feature in a first panorama and receiving a second user annotation for the feature in a second panorama. A coordinate is determined based on an intersection between data generated for the first user annotation and for the second user annotation for the feature. Finally, the coordinate is stored in association with an annotation representing the feature.

In a sixth embodiment, a system may be used to process annotations for panoramas. The system includes a server that receives a first user annotation for a feature in a first panorama and receives a second user annotation for the feature in a second panorama. The server determines a location of the feature based on a first location of the first user annotation and a second location for the second user annotation for the feature.

Further embodiments, features, and advantages of the present invention, as well as the structure and operation of the various embodiments of the present invention, are described in detail below with reference to the accompanying drawings.

BRIEF DESCRIPTION OF THE DRAWINGS/FIGURES

Embodiments of the invention are described with reference to the accompanying drawings. In the drawings, like reference numbers may indicate identical or functionally similar elements.

FIG. 1 is a diagram of an exemplary distributed system suitable for practicing an embodiment.

FIG. 2 is a diagram illustrating an example of how a mapping service can be integrated with a panorama viewer, in accordance with an embodiment.

FIG. 3 depicts an example of a browser display, in accordance with an embodiment.

FIG. 4 is a flowchart illustrating exemplary processing performed by a panorama viewer, in accordance with an embodiment.

FIG. 5 depicts exemplary Extensible Markup Language (XML) configuration information.

FIG. 6 illustrates an example of a panoramic image.

FIGS. 7A, 7B, and 7C illustrate user interaction with the panorama viewer viewport.

FIG. 8 is a flowchart of processing performed by a renderer, in accordance with an embodiment.

FIGS. 9A, 9B, and 9C illustrate a relationship between a surface, a precomputed region, and a viewport.

FIG. 10A and 10B illustrate a simple example of generating transformation parameters.

FIG. 11 depicts a panorama which has been warped, in accordance with an embodiment of the invention.

FIG. 12 depicts an exemplary transformation based on yaw and pitch for forming the panorama of FIG. 11.

FIG. 13 depicts an exemplary panorama image displayed in accordance with an embodiment of the invention.

FIG. 14 is a diagram illustrating how to generate coordinates for a user annotation, in accordance with an embodiment.

FIG. 15 is a flowchart of processing performed in the generation of user annotation coordinates, in accordance with an embodiment.

The present invention is described with reference to the accompanying drawings. The drawing in which an element first appears is typically indicated by the leftmost digit or digits in the corresponding reference number.

DETAILED DESCRIPTION

The present invention relates to rendering, viewing and annotating panoramic images, and applications thereof. In the detailed description of the invention herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

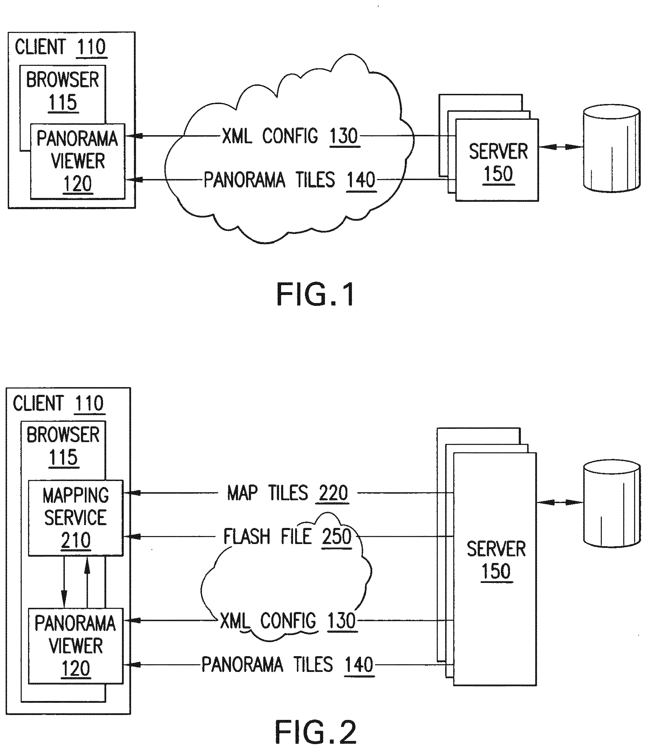

FIG. 1 is a distributed system suitable for practice of an embodiment of the invention. A client 110 communicates with one or more servers 150, for example, across a network such as the Internet or a local area network. Client 110 can be a general-purpose computer with a processor, local memory, a display, and one or more input devices such as a keyboard or a mouse. Alternatively, client 110 can be a specialized computing device such as, for example, a mobile handset. Server(s) 150, similarly, can be implemented using any general-purpose computer capable of serving data to client 110.

Client 110 executes a panorama viewer 120, the operation of which is further described herein.

As illustrated by FIG. 1, panorama viewer 120 requests configuration information 130 from server(s) 150. As discussed in further detail herein, the configuration information includes meta-information about a panorama to be loaded, including information on links within the panorama to other panoramas. In an embodiment, the configuration information is presented in a form such as the Extensible Markup Language (XML). Panorama viewer 120 retrieves visual assets 140 for the panorama, for example, in the form of panoramic images or in the form of panoramic image tiles. In another embodiment, the visual assets include the configuration information in the relevant file format. Panorama viewer 120 presents a visual representation on the client display of the panorama and additional user interface elements, as generated from configuration information 130 and visual assets 140, as further described herein. As a user interacts with an input device to manipulate the visual representation of the panorama, panorama viewer 120 updates the visual representation and proceeds to download additional configuration information and visual assets as needed.

In an embodiment, panorama viewer 120 can be a standalone application, or it can be executed within a browser 115, such as Mozilla Firefox or Microsoft Internet Explorer. Panorama viewer 120, for example, can be executed as a script within browser 115, as a plug-in within browser 115, or as a program which executes within a browser plug-in, such as the Adobe (Macromedia) Flash plug-in. In an embodiment, panorama viewer 120 is integrated with a mapping service, such as the one described in U.S. Patent No. 7,158,878, "DIGITAL MAPPING SYSTEM", which is incorporated by reference in its entirety herein.

FIG. 2 illustrates an example of how a mapping service 210 can be integrated with panorama viewer 120. Mapping service 210 displays a visual representation of a map, e.g., as a viewport into a grid of map tiles. Mapping system 210 is implemented using a combination of markup and scripting elements, e.g., using HTML and Javascript. As the viewport is moved, mapping service 210 requests additional map tiles 220 from server(s) 150, assuming the requested map tiles have not already been cached in local cache memory. Notably, the server(s) which serve map tiles 220 can be the same or different server(s) from the server(s) which serve panorama tiles 140 or the other data involved herein.

In an embodiment, mapping service 210 can request that browser 115 proceed to download a program 250 for panorama viewer 120 from server(s) 150 and to instantiate any plug-in necessary to run program 250. Program 250 may be a Flash file or some other form of executable content. Panorama viewer 120 executes and operates as described above. Alternatively, configuration information 130 and even panorama tiles 140 can be retrieved by mapping service 210 and passed to panorama viewer 120. Panorama viewer 120 and mapping service 210 communicate so as to coordinate the operation of the user interface elements, to allow the user to interact with either panorama viewer 120 or mapping service 210, and to have the change in location or orientation reflected in both.

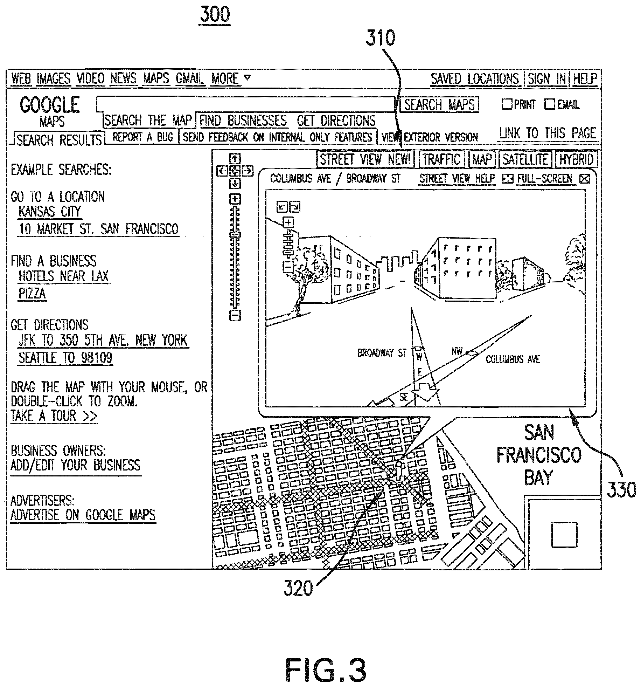

FIG. 3 is an example browser display 300 that presents both a mapping service such as mapping service 210 and an integrated panorama viewer such as panorama viewer 120. The mapping service provides a button 310 entitled "Street View" that, when selected, preferably changes the appearance of the map in areas where panorama data is available. For example, in FIG. 3, streets with available panorama data are highlighted. This highlighting can be, for example, a colored and/or shaded outline or overlay, or a change in color and/or shading. This can be implemented by using a transparency image with the map tile or by directly including the effect in the map tile served to the mapping service.

The mapping service allows a user to activate the panorama viewer by further selecting a point on the map. When a point is selected by the user, a character or avatar icon 320 is displayed at the point on the map. In an embodiment, the avatar icon includes an indicator of what direction the avatar icon is facing, which in FIG. 3 is represented as an arrow underneath the avatar icon.

In an embodiment, as the panorama viewer is instantiated by the mapping service, the panorama viewer is presented in the form of viewport 330 embedded in an informational balloon window associated with avatar icon 320. The orientation of the visual representation of the panorama within viewport 330 matches the orientation of avatar icon 320. As the user manipulates the visual representation of the panorama within viewport 330, the panorama viewer informs the mapping service of any changes in orientation or location so that the mapping service can update the orientation and location of avatar icon 320. Likewise, as the user manipulates the orientation or location of avatar icon 320 within the mapping service, the mapping service informs the panorama viewer so that the panorama viewer can update its visual representation.

In an embodiment, the viewport 330 of the panorama viewer presents a panoramic image of the selected area. The user can click and drag around on the image to look around 360 degrees. In the example viewport 330 depicted in FIG. 3, a variety of user interface elements are added to the underlying panorama. These elements include navigation inputs such as, for example, zoom and panning controls (e.g., navigation buttons) on the left side of the viewport and annotations in the form of lines/bars, arrows, and text that are provided directly in the panorama itself. The annotations are rendered in a three dimensional manner that roughly matches the three dimensional scene depicted in the panorama.

In FIG. 3, for example, the lines/bars in viewport 330 correspond to the streets depicted in the corresponding map and can even be rendered in the same color as the streets depicted in the map. The arrows are selectable by a user (by clicking or by dragging along the street line), one going in each direction that there is another panorama available. These allow the user to navigate up and down the street (i.e., to change the vantage point from which the street is viewed). As the user looks around 360 degrees, the lines and arrows smoothly track the underlying imagery so that the lines remain on top of the underlying streets, and so that the arrows are always visible on the screen. This allows the user to navigate along the street while looking straight ahead, or while looking to the side of the storefront.

When the user clicks on an arrow to navigate within the viewport, a zooming cross-fade effect and other visual cues give the user a sense of movement. When the user arrives at an intersection of two streets, there is one green line and two arrows for each street. All of these are visible at the same time, and all are labeled, so that the user knows the current location and can proceed in any direction. This technique can readily scale to accommodate complex intersections with more than four directions. When the user reaches a "dead end" where the road continues but no further imagery is available, there is only one arrow on the street indicating the direction in which the user can navigate. In the other direction, a symbol and message embedded in the image can be presented to inform the user that imagery is not available in this direction.

The user interface is not restricted to navigating along a line to walk down a street and can be readily extended to allow users to stray from the line elements when useful: for example, to cross over to the opposite side of the street to get a closer look at something. Moreover, there are environments within a city where a user might be expected to desire to snap off of a street and navigate freely within an adjacent area, for example, a park, plaza, shopping area, or other pedestrian-friendly public place. The interface can be readily enhanced with "free movement zones" to provide this functionality. It should also be noted that although the user interface is presented in the context of navigation between discrete street-level panoramas, it could equally well be used to allow a user to navigate through a more continuous set of panoramic data, such that navigating along a street would be as smooth as video.

The operation and implementation of the user interface elements are described in further detail below.

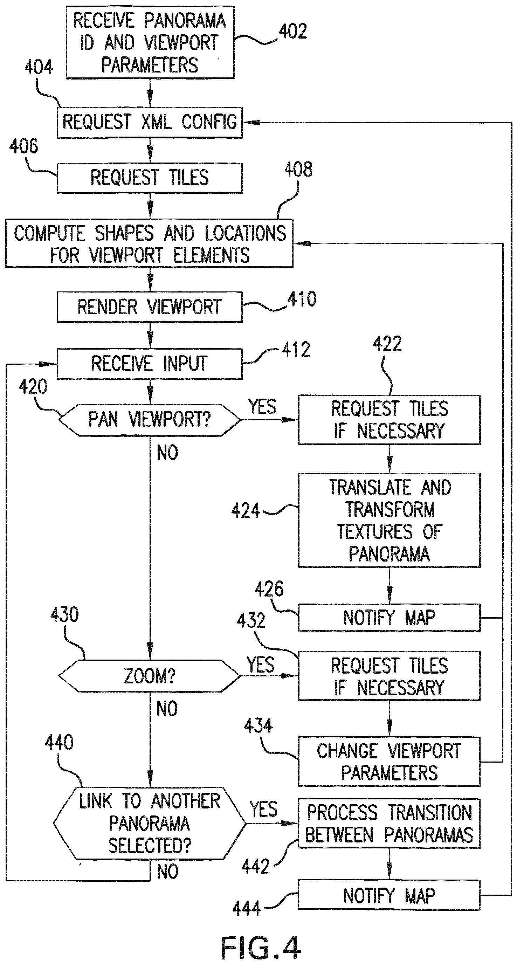

FIG. 4 is an exemplary flowchart of processing performed by a panorama viewer such as, for example, panorama viewer 120, in accordance with an embodiment of the invention.

At step 402, the panorama viewer receives an identifier for the initial panorama to be presented and various viewport parameters, such as the size of the viewport and the orientation to be viewed within the panorama. This information can be passed to the panorama viewer from a mapping service, e.g., by using Flashvars or ExternalInterface between the Flash plug-in and the Javascript in the mapping service.

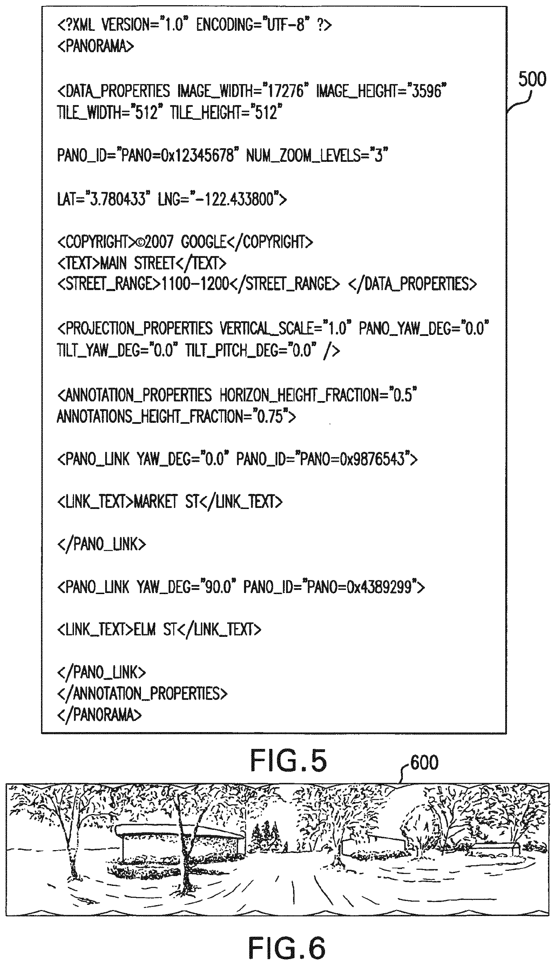

At step 404, the panorama viewer uses the panorama identifier to request configuration information from the server (e.g., an XML file). FIG. 5 depicts exemplary XML configuration information 500 and is discussed in further detail below. The XML is parsed, and the information is loaded into various data structures for use by the panorama viewer. In an embodiment, the XML includes information for the panorama viewer such as data properties and projection properties of the current panorama, and information on annotations/links within the panorama, including links to other panoramas.

At step 406, the panorama viewer requests the visual assets for the panorama and stores the received visual assets, for example, in local memory/storage. In an embodiment, the panorama viewer can maintain a cache of visual assets and limit bandwidth usage to retrieval of visual assets which are not in the cache. FIG. 6 illustrates an example of an initial panoramic image 600. The complete panoramic image 600 can be retrieved by the panorama viewer, or panoramic image 600 can be divided into multiple panorama image tiles and the tiles requested only as needed by the panorama viewer.

At step 408, the panorama viewer processes the configuration information and the visual assets to prepare for rendering the visual representation of the panorama in the viewport at step 410. With regard to the visual assets, the panorama viewer can assemble the panorama image tiles into the portion of the complete panoramic image which overlaps with the viewport. The panorama viewer can present the panoramic image as a flat surface or as a texture-mapped three dimensional surface such as, for example, a cylinder or a sphere, as further discussed herein. With regard to the annotations overlay presented in the viewport, the panorama viewer uses the configuration information to compute the shapes and locations for these various elements such as, for example, the lines/bars and the arrows presented in the viewport.

In an embodiment, the polygons/shapes are modeled in a three-dimensional space that corresponds to the space depicted in the panorama. These polygons/shapes can be modeled, for example, using a pinhole camera model (e.g., the focal length can be generated by multiplying the height of the viewport by a constant relative depth of the center of rotation). The polygons/shapes of the annotations overlay change their orientation in the three-dimensional space in a manner that matches the change in orientation of the viewport. In one embodiment, the polygons/shapes are rotated by an angle equal to the difference between the current orientation of the user's point-of-view in the panorama and the direction of the annotation, as specified in the configuration information. The polygons/shapes can be further transformed around different spatial axes in order to take into account non-flat panoramas, as further described herein.

At step 410, the visual representation of the panorama in the viewport is rendered.

At step 412, the panorama viewer receives and manages input, for example, by capturing input events such as mouse and keyboard events. The panorama viewer, for example, detects whether the user has panned the viewport (e.g., by dragging the mouse or by selecting a pan control button), has selected to zoom (e.g., by clicking on the panorama or by moving the zoom slider control on the left of the viewport with the mouse) or has selected a link to another panorama (e.g., by clicking on an arrow with the mouse).

At step 420, a determination is made regarding whether a user has panned the viewport. If the user has panned the viewport, control transfers to step 422. If the user has not panned the viewport, control transfers to step 430.

At step 422, the panorama viewer determines whether the viewport will overlap with any panorama image tiles which will need to be retrieved from either the server or a cache.

At step 424, the panorama viewer executes the necessary computations for allowing the viewport correctly to be rendered in a different orientation, as further described in detail herein.

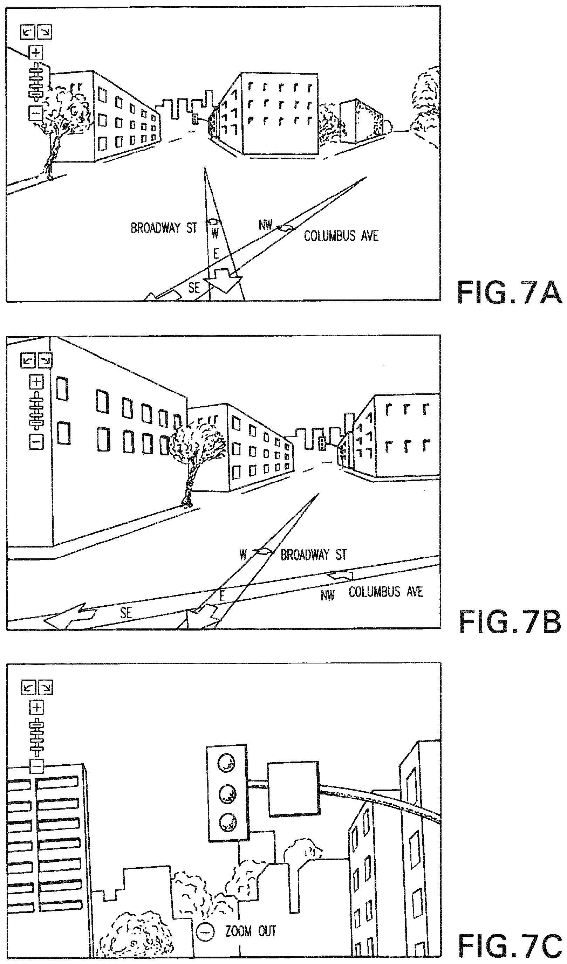

At step 426, the panorama viewer notifies the mapping service of the new orientation selected by the user so that the mapping service can update its avatar icon's facing indicator. The panorama viewer re-computes the shapes and locations for the viewport elements and renders the viewport. To illustrate this point, consider FIG. 7A which depicts the panorama viewer viewport from FIG. 3. FIG. 7B shows the result after a user has selected to pan the panorama to the left. Note that the lines/bars that correspond to the roads depicted in the panorama change their orientation as the panorama viewer changes the orientation of the panorama.

At step 430, a determination is made regarding whether a user has zoomed the viewport. If the user has zoomed the viewport, control transfers to step 432. If the user has not zoomed the viewport, control transfers to step 440.

At step 432, the panorama viewer determines, for example, whether to request new higher resolution panorama image tiles from a server (or from cache), or whether to utilize existing tiles at a different close-up resolution, for example, where no such higher resolution tiles exist.

At step 434, the viewport parameters are changed to reflect the different zoom level. A transition can be provided between the zoom levels so as to give the appearance of actively zooming into the next zoom level of the panorama. FIG. 7C shows the result after the user has selected to zoom in on a feature in FIG. 7A.

At step 440, a determination is made regarding whether a user has selected a link to another panorama. If the user has selected a link to another panorama, control transfers to step 442. If the user has not selected a link to another panorama, control transfers to step 412.

At step 442, the panorama viewer proceeds to begin the process of transitioning between the original panorama and the new panorama. The panorama viewer can, for example, zoom the original panorama and perform a cross-fade to the new panorama to give the user a sense of movement. Alternatively, the panorama viewer can play an actual video transition between the two panoramas.

At step 444, the panorama viewer notifies the mapping service of the new location selected by the user so that the mapping service can update its avatar icon's location and can scroll the map accordingly.

In embodiments, the panorama viewer can be implemented using any advantageous programming language or style of programming. For example, the panorama viewer can be implemented using object-oriented programming with separate classes designated to handle the XML configuration information, the annotations, the texture generation, the tile management, and the mesh generation.

FIG. 5 sets forth exemplary XML configuration information 500 (e.g., metadata). As illustrated by the example shown in FIG. 5, the schema for the configuration information is organized into "data_properties", "projection_properties", and "annotation_properties".

The subgroup Data Properties contains attributes such as "pano_id" (e.g., a unique identifier for the panorama), "image_width" and "image_height" (e.g., dimensions of the panoramic image before being split into tiles), "tile_width" and "tile_height" (e.g., dimensions of the tiles), "lat" and "lng" (e.g., coordinates of the current panorama), and "num_zoom_levels" (e.g., the number of zoom levels that the user will be able to view in the panorama viewer). This subgroup also contains elements such as "text" (e.g., that can be used to represent the street name of the current panorama), "copyright" (e.g., copyright information), and "street_range" (e.g., the range of numbers in the given street).

The subgroup Projection_properties contains attributes such as "Pano_yaw_deg" (e.g., orientation of the vehicle which captured the images which generated the panoramic image), "tilt_yaw_deg" and "tilt_pitch_deg" (e.g., the yaw and pitch of the line of highest slope which, as further described herein, is useful for dealing with panoramas with sloped features), and "vertical_scale" (e.g., fraction of the image along the y-axis that is visible at the lower zoom level).

The subgroup Annotation_properties contains attributes such as "horizon_height_fraction" (e.g., vertical position (height) of the horizon, expressed as a fraction of the visible strip, which can be adjusted to maximize the fit between the annotations and the imagery of the tiles) and "annotation_height_fraction" (e.g., vertical position (height) of the plan containing the annotations, expressed as a fraction of the visible strip). This subgroup also includes the "pano_link" subgroup which describes properties of link symbols that allow a user to navigate to a neighboring panorama or to another related document. The "link" subgroup includes "link_text" (e.g., description of the landing panorama) as an element and includes the following as attributes: "yaw_deg" (e.g., direction that the link is pointing to), "pano_id" (e.g., identifier to linked panorama), and "road_argb" (e.g., an attribute of the road, such as the color of the road on the map) (not shown). The subgroup can also include a "floating_text" group or element which identifies arbitrary features in the panorama and could also provide for an arbitrary link, for example to a local data repository or a website (not shown).

It should be noted that the above schema for the configuration information is merely illustrative and can be arranged in any of a number of advantageous ways, including using techniques that do not rely on XML.

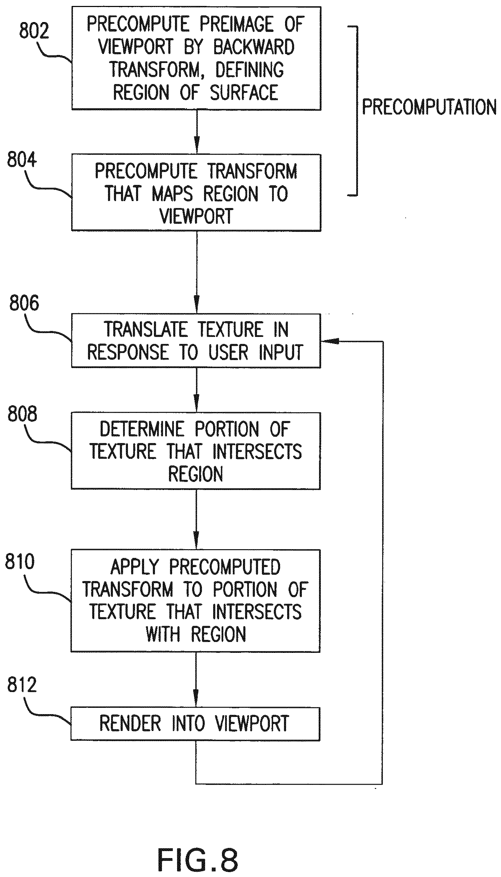

FIG. 8 is a flowchart of processing performed by a renderer in accordance with an embodiment of the invention.

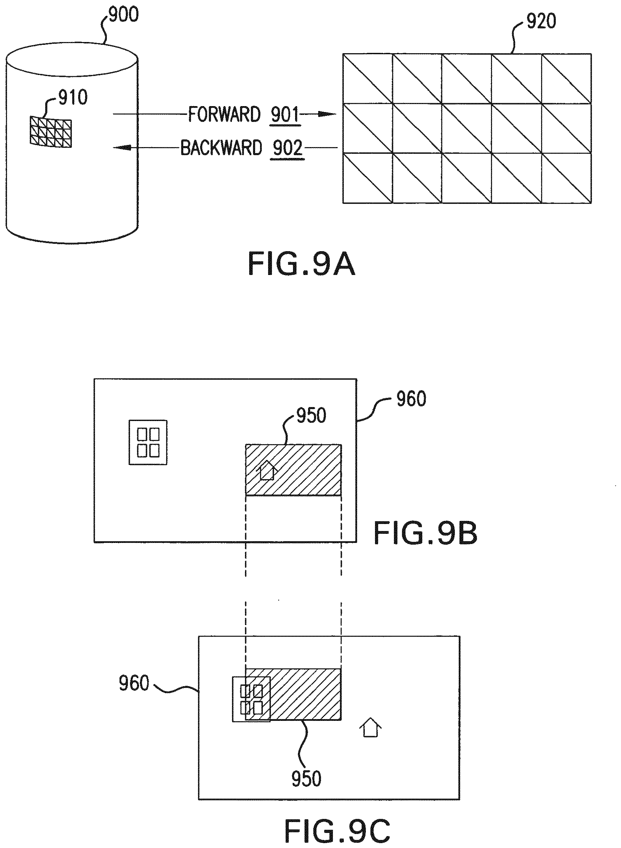

At step 802, the renderer precomputes a pre-image of a viewport by a backward transform. This defines a portion of a surface, which is referred to herein as the "precomputed region". FIG. 9A illustrates this in the context of a cylindrical surface 900 with a rectangular viewport 920, which defines a precomputed region 910 by the backward transformation. It should be noted that the viewport does not have to be rectangular and that the technique works for discretized cylinders (based on a mesh) or for continuous voxel-to-pixel mappings. For example, a mesh can be defined on the viewport with a corresponding mesh on the cylinder. These meshes do not have to be uniform, and are images of one another as defined by the forward or backward mappings. The mesh on the cylinder will typically only cover a portion of the cylinder. In the case of a continuous transformation, the pre-image of the viewport would define a continuous region of the cylinder.

At step 804, the renderer precomputes the transform, which maps each pixel from the precomputed region to a pixel in the viewport. In a sense, it is assumed that the cylinder is standing still in space. Instead of attaching a texture image to a changing cylinder, it is assumed that the texture will "slide" on the cylinder.

At step 806, the renderer translates an image/texture in response to a user input.

At step 808, the renderer determines that portion of the image/texture that intersects the precomputed region of the surface. This defines the set of pixels that need to be rendered in the viewport. If the user has changed the point of view recently, then this needs to be updated. More precisely, any panning to the left or right of the viewport can be readily achieved by translating the texture in the corresponding direction, at step 806, thereby generating a different intersection with the precomputed region. Likewise, any panning up or down is achieved by translating the texture along these directions. Any arbitrary direction of panning is achieved by simply translating the texture in the corresponding direction. Each time, a new intersection with the precomputed region is generated. This is illustrated in FIG. 9B and 9C, where 950 represents the precomputed region and 960 represents the image/texture.

At step 810, the precomputed transform is applied to the portion of image/texture that intersects with the precomputed region.

Finally, at step 812, the transformed imagery is rendered into the viewport.

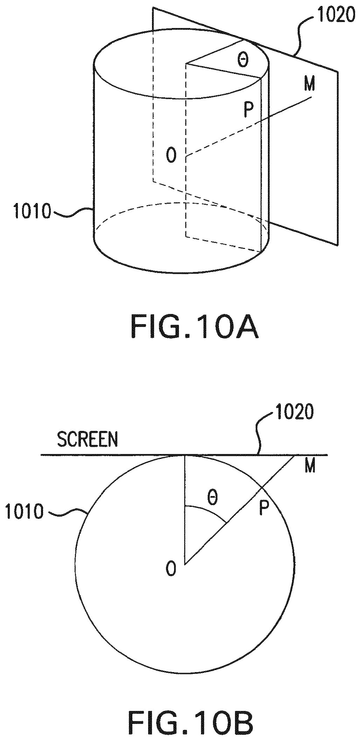

In an embodiment, the renderer utilizes properties of rectilinear projections to speed up the rendering of the panoramic images. If a surface like a cylinder is viewed as infinite, then it is a group endowed G with the natural operations (e.g., translation along axis, and rotation around axis). Likewise, the texture, if viewed as infinite, is also a group H endowed with translations in the plane. It turns out that there is a canonical *homomorphism* between G and H. In other words, a rotation of the cylinder around its axis is equivalent to a translation of the texture, for example, in the x-direction. A translation of the cylinder along its axis is equivalent to a translation of the texture, for example, in the y-direction. This allows one to pre-compute all projection parameters in advance and to simulate a change of viewpoint as a translation of the texture. FIG. 10A and 10B illustrate an example of how to compute projection parameters from the screen space to the texture space. As illustrated by FIG. 10A and 10B:

(1) If a point M on screen 1020 has coordinates (x, y), then in space it has coordinates (x, y, R), where R is the radius of the cylinder 1010.

(2) In this case, $\tan \theta = \dfrac{x}{R}$, and the point P has, in the texture space, the following coordinates:

$$P = \begin{pmatrix} \dfrac{\arctan\left(\dfrac{x}{R}\right)}{\dfrac{Ry}{\sqrt{x^2 + R^2}}} \end{pmatrix}.$$

A dynamic texture based on the current zoom level can be generated and positioned in the image space. This texture changes when the user changes the point-of-view (e.g., by zooming or panning). This texture can be obtained by concatenating tiles from a tile pyramid at the appropriate level and scale. If some tiles are missing, one can fall back on a tile at a parent level in the tile pyramid. The texture is modeled as being mapped over a cylinder. A projection is performed over the screen space. This nonlinear projection can be approximated as a piecewise affine transformation. More precisely, the cylinder and screen spaces can be discretized using a triangular mesh. Each triangle can be rendered by linearly (or rather, affinely) mapping a piece of the texture over it. This is well-defined as an affine transform in the two dimensional plane since it is uniquely determined by its action on three points (hence, the use of triangles). The mesh can be made uniform in the screen space (and not in the texture space). The screen mesh is always the same regardless of the zoom level. Different texture meshes can be used depending on the zoom level. For each triangle, a texture mesh corresponds to a unique triangle in the screen mesh and a unique (affine) transformation matrix. Such a matrix can be pre-computed as the product of a screen matrix and (the inverse of) a texture matrix.

When a user pans, all the renderer needs to do is adjust and/or refresh the texture. This is fast, because it consists of memory copies. Copying large chunks of pixels is usually highly optimized in several programming languages.

In an embodiment, zooming in consists of dividing both horizontal and vertical fields of vision by two and using the next zoom level to generate the texture. When the user zooms in/out, the panorama viewer can pre-cache a few bitmap images to make the animation smooth. As far as the projection itself, one can use the various sets of transformation matrices at integral zoom levels. At non-integral zoom levels, one can linearly interpolate the transformation matrices (still fast) between the previous zoom level and the next one.

In a case where pixels are assumed to be square, they correspond to homogeneous solid angles. The elementary field of vision of a given pixel is the same in the horizontal and the vertical directions. This enables a trade-off to be made. For example, one can choose exactly to preserve straight lines, but this will result in higher distortion on the side. Alternatively, one can decide to have straight lines become a bit curvy, and thereby reduce the amount of distortion. In an embodiment, the height of the original image is scaled to that of the viewport. Because the pixels are square, the ratio of the width over height of the viewport determines the horizontal field of vision.

In the case of a sphere rather than a cylinder, the assumptions above are no longer true. Accordingly, the above technique alone cannot simulate a true pan up/down, because all that is performed is a move along the cylinder's axis with the vision vector perpendicular to this axis. Nevertheless, the motion of a true pan up/down can be simulated by pre-computing a series of transforms and linearly interpolating between the transforms.

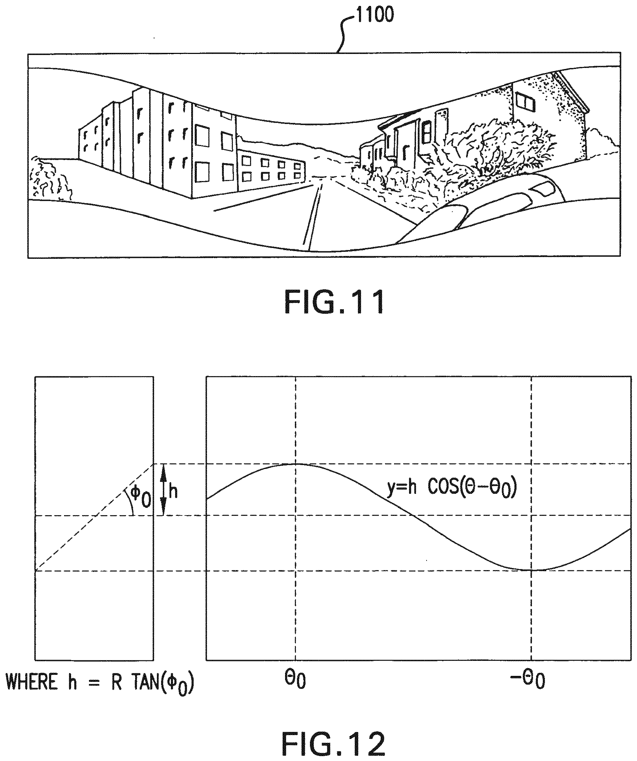

In an embodiment, the panorama viewer is configured to handle non-flat panoramas. Not all panoramas depict flat and horizontal features, e.g., consider many of the streets of San Francisco. Cameras mounted on a vehicle, for example, used to capture panoramas are parallel to the ground. Thus, traveling on a steep incline can result in misoriented pictures. Accordingly, in such situations, it can be advantageous to warp the panorama so as to ensure that vertical buildings in the real world remain vertical in the texture space. FIG. 11 depicts an example of how a panorama 1100 can be so warped. As illustrated by FIG. 12, the example roughly follows a periodic function which can be used to guide the placement of the viewport as well as the generation of the annotations in a manner that takes the slope of the panorama into account.

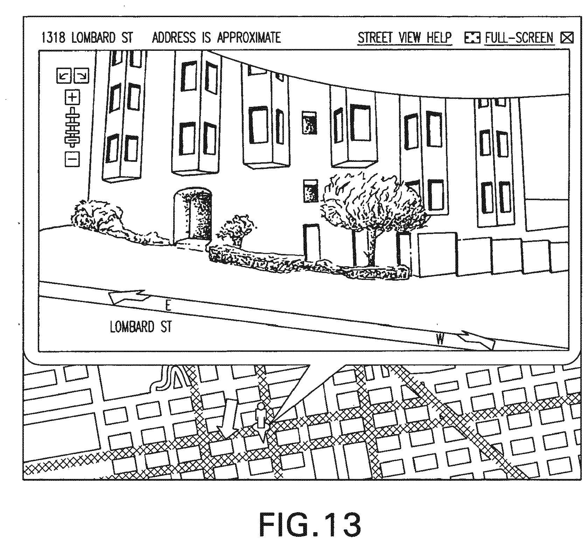

As noted herein, the configuration information can include projection properties such as the yaw and the pitch of the highest slope in the panorama. As illustrated by FIG. 12, the panorama viewer can use the yaw and pitch of the direction of the steepest slope to constrain the viewport to the sinusoidal strip of the warped panorama. The rendering of the annotation elements in the viewport also can be modified to take into account the yaw and pitch information of the slope of the panorama. The spatial orientation of the lines/bars and arrows can be transformed based on the yaw and pitch information or, alternatively, can be estimated based on the relative yaw of the annotation and the yaw of the steepest slope. FIG. 13 illustrates the result of such processing of configuration information on the slope of a panorama. The panorama correctly places the vertical buildings in the panoramic image on the steeply-sloped street. Moreover, the line/bar (e.g., street line metadata) depicting the road is tilted at an angle which roughly matches the slope of the street.

In an embodiment, the panorama viewer also is able to facilitate user annotations to a panorama image. User annotations to panoramas represent a challenge with respect to how to reference an annotation in three-dimensional space.

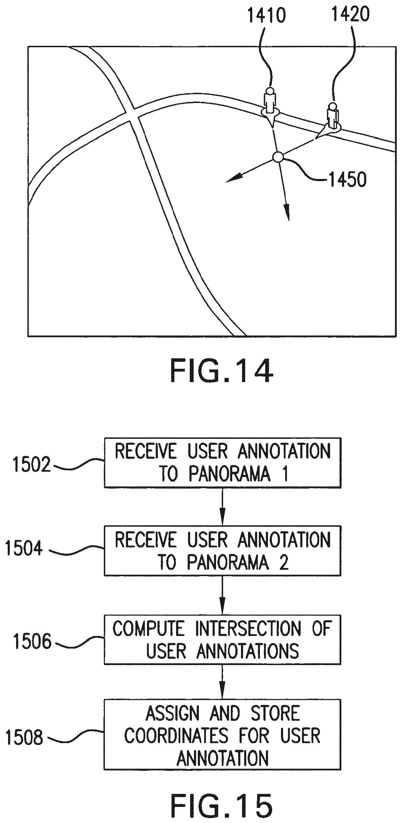

FIGS. 14 and 15 illustrate an embodiment which addresses user annotations in three-dimensional space. The processing illustrated in FIG. 15 can occur at the panorama viewer (or the mapping service), at the server, or a combination of the two.

Referring to FIG. 15, at step 1502, a user inputs an annotation with respect to one panorama. The panorama viewer can receive the user input in any of a number of different ways, including by receiving a click event on the spot on the panorama which the user desires to annotate. The two-dimensional location of the annotation on the panorama is recorded in some advantageous coordinate system, e.g., by location on the panorama image or by yaw and pitch coordinates.

At step 1504, the user navigates to another nearby panorama in the panorama viewer, locates the same feature to be annotated, and again inputs an annotation with respect to the second panorama. The panorama viewer or the mapping service can presumably also offer the ability to add additional metadata associated with the annotation, such as a title, link, graphics, etc.

At step 1506, the annotations coordinates on the two panoramas are used to generate three-dimensional coordinates for the annotation. Given the known position of the cameras which took the images for the panorama 1410, 1420 and the user-input annotation coordinates relative to the two-dimensional images, as illustrated in FIG. 14, it is possible to compute the intersection of the two, depicted as 1450. The result is a three-dimensional coordinate for the annotation.

At step 1508, the three-dimensional coordinate for the annotation is assigned to the annotation and stored in the database of annotations. The annotation can then be included with any panorama within some advantageous range of the computed coordinates, including panoramas which were not originally annotated by the user.

Alternatively, where the relative pitch information is not particularly important to an annotation, it is possible to receive the user annotations as a one-dimensional yaw direction on both panoramas, which facilitates the assignment of a two-dimensional geocode to the annotation (with or without default pitch information).

While various embodiments of the present invention have been described above, it should be understood that they have been presented by way of example, and not limitation. It will be apparent to persons skilled in the relevant art(s) that various changes can be made therein without departing from the scope of the invention as set out in the appended claims.

**Claims**

1. A method for viewing panoramic images, comprising:

   providing for display, by one or more computing devices, a viewport including a portion of a first panoramic image and a three-dimensional overlay rendered with the first panoramic image, wherein the three-dimensional overlay includes a navigational icon used to navigate between panoramic images;
   providing for display, by the one or more computing devices, a second panoramic image in response to user input indicating a selection of the navigation icon, wherein the second panoramic image is located at a direction relative to a location of the first panoramic image, the direction corresponding to a position of the navigation icon in the three-dimensional overlay; and

providing, by the one or more computing devices, instructions to display a transition between the portion of the first panoramic image and a portion of the second panoramic image by:

zooming into the first panoramic image, and fading between the first and second panoramic images such that the zooming and fading presents a smooth transition between the first and second panoramic images to the user.

2. The method of claim 1, wherein the first and second panoramic images correspond to street-level imagery.

3. The method of claim 2, wherein the three-dimensional overlay further includes a street line positioned to correspond to the direction of a street in the first panoramic image, and a street name positioned to identify the street in the first panoramic image.

4. The method of claim 1, further comprising:

displaying a user orientation character at a first position on a map, the first position corresponding to a location of the first panoramic image; and displaying the user orientation character at a second position on a map in response to the user input, wherein the second position is located at a direction relative to the first position, the direction corresponding to a position of the navigation icon in the three-dimensional overlay and to a location of the second panoramic image.

5. The method of claim 1, wherein the navigational icon is a button configured for selection by a user.

6. The method of claim 1, further comprising using the instructions to display the transition between the portion of the first panoramic image and the portion of the second panoramic image.

7. The method of claim 1, further comprising receiving the user input indicating a selection of the navigation icon.

8. A system for viewing panoramic images, the system comprising one or more computing devices configured to:

provide for display a viewport including a portion of a first panoramic image and a three-dimensional overlay rendered with the first panoramic image, wherein the three-dimensional overlay includes a navigational icon used to navigate between panoramic images;
provide for display a second panoramic image in response to user input indicating a selection of the navigation icon, wherein the second panoramic image is located at a direction relative to a location of the first panoramic image, the direction corresponding to a position of the navigation icon in the three-dimensional overlay; and
provide instructions to display a transition between the portion of the first panoramic image and a portion of the second panoramic image by:

zooming into the first panoramic image, and fading between the first and second panoramic images such that the zooming and fading presents a smooth transition between the first and second panoramic images to the user.

9. The system of claim 8, wherein the first and second panoramic images correspond to street-level imagery.

10. The system of claim 8, wherein the three-dimensional overlay further includes a street line positioned to correspond to the direction of a street in the first panoramic image, and a street name positioned to identify the street in the first panoramic image.

11. The system of claim 8, wherein the one or more processors are further configured to:

display a user orientation character at a first position on a map, the first position corresponding to a location of the first panoramic image; and display the user orientation character at a second position on a map in response to the user input, wherein the second position is located at a direction relative to the first position, the direction corresponding to a position of the navigation icon in the three-dimensional overlay and to a location of the second panoramic image.

12. The system of claim 8, wherein the navigational icon is a button configured for selection by a user.

13. The system of claim 8, wherein the one or more computing devices are further configured to use the instructions to display the transition between the portion of the first panoramic image and the portion of the second panoramic image.

14. The system of claim 8, wherein the one or more computing devices are further configured to receive the user input indicating a selection of the navigation icon.

15. A tangible computer-readable storage medium on which computer readable instructions of a program are stored, the instructions, when executed by one or more processors, cause the one or more processors to perform a method of viewing panoramic images, the method comprising:

   providing for display a viewport including a portion of a first panoramic image and a three-dimensional overlay rendered with the first panoramic image, wherein the three-dimensional overlay includes a navigational icon used to navigate between panoramic images;
   providing for display a second panoramic image in response to user input indicating a selection of the navigation icon, wherein the second panoramic image is located at a direction relative to a location of the first panoramic image, the direction corresponding to a position of the navigation icon in the three-dimensional overlay; and
   providing instructions to display a transition between the portion of the first panoramic image and a portion of the second panoramic image by:

   zooming into the first panoramic image, and fading between the first and second panoramic images such that the zooming and fading presents a smooth transition between the first and second panoramic images to the user.

16. The medium of claim 15, wherein the first and second panoramic images correspond to street-level imagery.

17. The medium of claim 15, wherein the three-dimensional overlay further includes a street line positioned to correspond to the direction of a street in the first panoramic image, and a street name positioned to identify the street in the first panoramic image.

18. The medium of claim 15 wherein the method further comprises:

   displaying a user orientation character at a first position on a map, the first position corresponding to a location of the first panoramic image; and
   displaying the user orientation character at a second position on a map in response to the user input, wherein the second position is located at a direction relative to the first position, the direction corresponding to a position of the navigation icon in the three-dimensional overlay and to a location of the second panoramic image.

19. The medium of claim 15, wherein the navigational icon is a button configured for selection by a user.

20. The medium of claim 15, wherein the method further comprises using the instructions to display the transition between the portion of the first panoramic image and the portion of the second panoramic image.

**Patentansprüche**

1. Verfahren zum Betrachten von Panoramabildern, umfassend:

   Bereitstellen, zur Anzeige durch eine oder mehrere Computervorrichtungen, eines Ansichtsbereichs, das einen Abschnitt eines ersten Panoramabilds und eine dreidimensionale Überblendung, die mit dem ersten Panoramabild gerendert wird, beinhaltet, wobei die dreidimensionale Überblendung ein Navigationssymbol beinhaltet, das zum Navigieren zwischen Panoramabildern verwendet wird;
   Bereitstellen, zur Anzeige durch die eine oder die mehreren Computervorrichtungen, eines zweiten Panoramabilds als Reaktion auf eine Benutzereingabe, die eine Auswahl des Navigationssymbols angibt, wobei das zweite Panoramabild in einer Richtung relativ zu einem Ort des ersten Panoramabilds angeordnet ist, wobei die Richtung einer Position des Navigationssymbols in der dreidimensionalen Überblendung entspricht; und
   Bereitstellen, durch die eine oder die mehreren Computervorrichtungen, von Anweisungen, um einen Übergang zwischen dem Abschnitt des ersten Panoramabilds und einem Teil des zweiten Panoramabilds durch Folgendes anzuzeigen:

   Zoomen in das erste Panoramabild, und Überblenden zwischen dem ersten und dem zweiten Panoramabild, sodass das Zoomen und Überblenden dem Benutzer einen sanften Übergang zwischen dem ersten und dem zweiten Panoramabild darstellt.

2. Verfahren nach Anspruch 1, wobei das erste und das zweite Panoramabild Bildern auf Straßenebene entsprechen.

3. Verfahren nach Anspruch 2, wobei die dreidimensionale Überblendung ferner eine Straßenlinie beinhaltet, die positioniert ist, um der Richtung einer Straße in dem ersten Panoramabild zu entsprechen, und einen Straßennamen, der positioniert ist, um die Straße im ersten Panoramabild zu identifizieren, beinhaltet.

4. Verfahren nach Anspruch 1, ferner umfassend:

Anzeigen eines Benutzerorientierungszeichens an einer ersten Position auf einer Karte, wobei die erste Position einem Ort des ersten Panoramabilds entspricht; und
Anzeigen des Benutzerorientierungszeichens an einer zweiten Position auf einer Karte als Reaktion auf die Benutzereingabe, wobei sich die zweite Position in einer Richtung in Bezug auf die erste Position angeordnet ist, wobei die Richtung einer Position des Navigationssymbols in der dreidimensionalen Überblendung und einem Ort des zweiten Panoramabilds entspricht.

5. Verfahren nach Anspruch 1, wobei das Navigationssymbol eine Schaltfläche ist, die für eine Auswahl durch einen Benutzer konfiguriert ist.

6. Verfahren nach Anspruch 1, ferner umfassend ein Verwenden der Anweisungen zum Anzeigen des Übergangs zwischen dem Abschnitt des ersten Panoramabilds und dem Abschnitt des zweiten Panoramabilds.

7. Verfahren nach Anspruch 1, ferner umfassend ein Empfangen der Benutzereingabe, die eine Auswahl des Navigationssymbols angibt.

8. System zum Betrachten von Panoramabildern, das System umfassend eine oder mehrere Computervorrichtungen, die zu Folgendem konfiguriert sind:

Bereitstellen, zur Anzeige, eines Ansichtsbereichs, das einen Abschnitt eines ersten Panoramabilds und eine dreidimensionale Überblendung, die mit dem ersten Panoramabild gerendert wird, beinhaltet, wobei die dreidimensionale Überblendung ein Navigationssymbol beinhaltet, das zum Navigieren zwischen Panoramabildern verwendet wird;
Bereitstellen, zur Anzeige, eines zweiten Panoramabilds als Reaktion auf eine Benutzereingabe, die eine Auswahl des Navigationssymbols angibt, wobei das zweite Panoramabild in einer Richtung relativ zu einem Ort des ersten Panoramabilds angeordnet ist, wobei die Richtung einer Position des Navigationssymbols in der dreidimensionalen Überblendung entspricht; und
Bereitstellen von Anweisungen zur Anzeige eines Übergangs zwischen dem Abschnitt des ersten Panoramabilds und einem Abschnitt des zweiten Panoramabilds durch Folgendes:

Zoomen in das erste Panoramabild, und Überblenden zwischen dem ersten und dem zweiten Panoramabild, sodass das Zoomen und Überblenden dem Benutzer einen sanften Übergang zwischen dem ersten und dem zweiten Panoramabild darstellt.

9. System nach Anspruch 8, wobei das erste und das zweite Panoramabild Bildern auf Straßenebene entsprechen.

10. System nach Anspruch 8, wobei die dreidimensionale Überblendung ferner eine Straßenlinie beinhaltet, die positioniert ist, um der Richtung einer Straße in dem ersten Panoramabild zu entsprechen, und einen Straßennamen, der positioniert ist, um die Straße im ersten Panoramabild zu identifizieren, beinhaltet.

11. System nach Anspruch 8, wobei der eine oder die mehreren Prozessoren ferner zu Folgendem konfiguriert sind:

Anzeigen eines Benutzerorientierungszeichens an einer ersten Position auf einer Karte, wobei die erste Position einem Ort des ersten Panoramabilds entspricht; und
Anzeigen des Benutzerorientierungszeichens an einer zweiten Position auf einer Karte als Reaktion auf die Benutzereingabe, wobei sich die zweite Position in einer Richtung in Bezug auf die erste Position angeordnet ist, wobei die Richtung einer Position des Navigationssymbols in der dreidimensionalen Überblendung und einem Ort des zweiten Panoramabilds entspricht.

12. System nach Anspruch 8, wobei das Navigationssymbol eine Schaltfläche ist, die für eine Auswahl durch einen Benutzer konfiguriert ist.

13. System nach Anspruch 8, wobei die eine oder die mehreren Computervorrichtungen ferner konfiguriert sind, um die Anweisungen zur Anzeige des Übergangs zwischen dem Abschnitt des ersten Panoramabilds und dem Abschnitt des zweiten Panoramabilds zu verwenden.

14. System nach Anspruch 8, wobei die eine oder die mehreren Computervorrichtungen ferner konfiguriert sind, um die Benutzereingabe zu empfangen, die eine Auswahl des Navigationssymbols angibt.

15. Materielles computerlesbares Speichermedium, auf dem computerlesbare Anweisungen eines Programms gespeichert sind, wobei die Anweisungen, wenn sie von einem oder mehreren Prozessoren ausgeführt werden, den einen oder die mehreren Prozessoren veranlassen, ein Verfahren zum Betrachten von Panoramabildern auszuführen, das Verfahren umfassend:

Bereitstellen, zur Anzeige, eines Ansichtsbereichs, das einen Abschnitt eines ersten Panoramabilds und eine dreidimensionale Überblendung, die mit dem ersten Panoramabild gerendert wird, beinhaltet, wobei die dreidimensionale Überblendung ein Navigationssymbol beinhaltet, das zum Navigieren zwischen Panoramabildern verwendet wird;

Bereitstellen, zur Anzeige, eines zweiten Panoramabilds als Reaktion auf eine Benutzereingabe, die eine Auswahl des Navigationssymbols angibt, wobei das zweite Panoramabild in einer Richtung relativ zu einem Ort des ersten Panoramabilds angeordnet ist, wobei die Richtung einer Position des Navigationssymbols in der dreidimensionalen Überblendung entspricht; und

Bereitstellen von Anweisungen zur Anzeige eines Übergangs zwischen dem Abschnitt des ersten Panoramabilds und einem Abschnitt des zweiten Panoramabilds durch Folgendes:

Zoomen in das erste Panoramabild, und Überblenden zwischen dem ersten und dem zweiten Panoramabild, sodass das Zoomen und Überblenden dem Benutzer einen sanften Übergang zwischen dem ersten und dem zweiten Panoramabild darstellt.

16. Medium nach Anspruch 15, wobei das erste und das zweite Panoramabild Bildern auf Straßenebene entsprechen.

17. Medium nach Anspruch 15, wobei die dreidimensionale Überblendung ferner eine Straßenlinie beinhaltet, die positioniert ist, um der Richtung einer Straße in dem ersten Panoramabild zu entsprechen, und einen Straßennamen, der positioniert ist, um die Straße im ersten Panoramabild zu identifizieren, beinhaltet.

18. Medium nach Anspruch 15, wobei das Verfahren ferner Folgendes umfasst:

Anzeigen eines Benutzerorientierungszeichens an einer ersten Position auf einer Karte, wobei die erste Position einem Ort des ersten Panoramabilds entspricht; und

Anzeigen des Benutzerorientierungszeichens an einer zweiten Position auf einer Karte als Reaktion auf die Benutzereingabe, wobei sich die zweite Position in einer Richtung in Bezug auf die erste Position angeordnet ist, wobei die Richtung einer Position des Navigationssymbols in der dreidimensionalen Überblendung und einem Ort des zweiten Panoramabilds entspricht.

19. Medium nach Anspruch 15, wobei das Navigationssymbol eine Schaltfläche ist, die für eine Auswahl durch einen Benutzer konfiguriert ist.

20. Medium nach Anspruch 15, wobei das Verfahren ferner ein Verwendung der Anweisungen zum Anzeigen des Übergangs zwischen dem Abschnitt des ersten Panoramabilds und dem Abschnitt des zweiten Panoramabilds umfasst.

## Revendications

1. Procédé de visualisation d'images panoramiques, comprenant :

la délivrance pour affichage, par un ou plusieurs dispositifs informatiques, d'une fenêtre d'affichage incluant une partie d'une première image panoramique et une superposition tridimensionnelle rendue avec la première image panoramique, dans lequel la superposition tridimensionnelle inclut une icône de navigation utilisée pour naviguer entre les images panoramiques ;

la délivrance pour affichage, par l'un ou plusieurs dispositifs informatiques, d'une seconde image panoramique en réponse à une entrée d'utilisateur indiquant une sélection de l'icône de navigation, dans lequel la seconde image panoramique est située dans une direction par rapport à un emplacement de la première image panoramique, la direction correspondant à une position de l'icône de navigation dans la superposition tridimensionnelle ; et

la délivrance, par l'un ou plusieurs dispositifs informatiques, d'instructions pour afficher une transition entre la partie de la première image panoramique et une partie de la seconde image panoramique par :

un zoom sur la première image panoramique, et

un fondu entre les première et seconde images panoramiques de sorte que le zoom et le fondu présentent une transition en douceur entre les première et seconde images panoramiques pour l'utilisateur.

2. Procédé selon la revendication 1, dans lequel les première et seconde images panoramiques correspondent à des images au niveau de la rue.

3. Procédé selon la revendication 2, dans lequel la superposition tridimensionnelle inclut en outre une ligne de rue positionnée pour correspondre à la direction d'une rue dans la première image panoramique, et un nom de rue positionné pour identifier la rue dans la première image panoramique.

**4.** Procédé selon la revendication 1, comprenant en outre :

l'affichage d'un caractère d'orientation d'utilisateur à une première position sur une carte, la première position correspondant à un emplacement de la première image panoramique ; et l'affichage du caractère d'orientation d'utilisateur à une seconde position sur une carte en réponse à l'entrée de l'utilisateur, dans lequel la seconde position est située dans une direction par rapport à la première position, la direction correspondant à une position de l'icône de navigation dans la superposition tridimensionnelle et à un emplacement de la seconde image panoramique.

**5.** Procédé selon la revendication 1, dans lequel l'icône de navigation est un bouton configuré pour être sélectionné par un utilisateur.

**6.** Procédé selon la revendication 1, comprenant en outre l'utilisation des instructions pour afficher la transition entre la partie de la première image panoramique et la partie de la seconde image panoramique.

**7.** Procédé selon la revendication 1, comprenant en outre la réception de l'entrée d'utilisateur indiquant une sélection de l'icône de navigation.

**8.** Système de visualisation d'images panoramiques, le système comprenant un ou plusieurs dispositifs informatiques configurés pour :

délivrer pour affichage une fenêtre d'affichage incluant une partie d'une première image panoramique et une superposition tridimensionnelle rendue avec la première image panoramique, dans laquelle la superposition tridimensionnelle inclut une icône de navigation utilisée pour naviguer entre les images panoramiques ; délivrer pour affichage une seconde image panoramique en réponse à une entrée d'utilisateur indiquant une sélection de l'icône de navigation, dans lequel la seconde image panoramique est située dans une direction par rapport à un emplacement de la première image panoramique, la direction correspondant à une position de l'icône de navigation dans la superposition tridimensionnelle ; et délivrer des instructions pour afficher une transition entre la partie de la première image panoramique et une partie de la seconde image panoramique par : un zoom sur la première image panoramique, et un fondu entre les première et seconde images panoramiques de sorte que le zoom et le fondu présentent une transition en douceur entre les première et seconde images panoramiques pour l'utilisateur.

**9.** Système selon la revendication 8, dans lequel les première et seconde images panoramiques correspondent à des images au niveau de la rue.

**10.** Système selon la revendication 8, dans lequel la superposition tridimensionnelle inclut en outre une ligne de rue positionnée pour correspondre à la direction d'une rue dans la première image panoramique, et un nom de rue positionné pour identifier la rue dans la première image panoramique.

**11.** Système selon la revendication 8, dans lequel l'un ou plusieurs processeurs sont en outre configurés pour : afficher un caractère d'orientation d'utilisateur à une première position sur une carte, la première position correspondant à un emplacement de la première image panoramique ; et afficher le caractère d'orientation d'utilisateur à une seconde position sur une carte en réponse à l'entrée de l'utilisateur, dans lequel la deuxième position est située dans une direction par rapport à la première position, la direction correspondant à une position de l'icône de navigation dans la superposition tridimensionnelle et à un emplacement de la seconde image panoramique.

**12.** Système selon la revendication 8, dans lequel l'icône de navigation est un bouton configuré pour être sélectionné par un utilisateur.

**13.** Système selon la revendication 8, dans lequel l'un ou plusieurs dispositifs informatiques sont en outre configurés pour utiliser les instructions pour afficher la transition entre la partie de la première image panoramique et la partie de la seconde image panoramique.

**14.** Système selon la revendication 8, dans lequel l'un ou plusieurs dispositifs informatiques sont en outre configurés pour recevoir l'entrée d'utilisateur indiquant une sélection de l'icône de navigation.

**15.** Support de stockage tangible lisible par ordinateur sur lequel sont stockées des instructions lisibles par ordinateur d'un programme, les instructions, lorsqu'elles sont exécutées par un ou plusieurs processeurs, amènent l'un ou plusieurs processeurs à exécuter un procédé de visualisation d'images panoramiques, le procédé comprenant :

la délivrance pour affichage d'une fenêtre d'affichage incluant une partie d'une première image panoramique et une superposition tridimensionnelle rendue avec la première image panoramique, dans lequel la superposition tridimensionnelle comprend une icône de navigation utilisée pour naviguer entre les images panoramiques ;

la délivrance pour affichage d'une seconde image panoramique en réponse à une entrée d'utilisateur indiquant une sélection de l'icône de navigation, dans lequel la seconde image panoramique est située dans une direction par rapport à un emplacement de la première image panoramique, la direction correspondant à une position de l'icône de navigation dans la superposition tridimensionnelle ; et la délivrance d'instructions pour afficher une transition entre la partie de la première image panoramique et une partie de la deuxième image panoramique par : un zoom sur la première image panoramique, et un fondu entre les première et seconde images panoramiques de sorte que le zoom et le fondu présentent une transition en douceur entre les première et seconde images panoramiques pour l'utilisateur.

**16.** Support selon la revendication 15, dans lequel les première et seconde images panoramiques correspondent à des images au niveau de la rue.

**17.** Support selon la revendication 15, dans lequel la superposition tridimensionnelle inclut en outre une ligne de rue positionnée pour correspondre à la direction d'une rue dans la première image panoramique, et un nom de rue positionné pour identifier la rue dans la première image panoramique.

**18.** Procédé selon la revendication 15, dans lequel le procédé comprend en outre :

l'affichage d'un caractère d'orientation d'utilisateur à une première position sur une carte, la première position correspondant à un emplacement de la première image panoramique ; et l'affichage du caractère d'orientation d'utilisateur à une seconde position sur une carte en réponse à l'entrée de l'utilisateur, dans lequel la seconde position est située dans une direction par rapport à la première position, la direction correspondant à une position de l'icône de navigation dans la superposition tridimensionnelle et à un emplacement de la seconde image panoramique.

**19.** Support selon la revendication 15, dans lequel l'icône de navigation est un bouton configuré pour être sélectionné par un utilisateur.

**20.** Support selon la revendication 15, dans lequel le procédé comprend en outre l'utilisation des instructions pour afficher la transition entre la partie de la première image panoramique et la partie de la seconde image panoramique.

FIG.1

FIG.2

300

310

WEB IMAGES VIDEO NEWS MAPS GMAIL MORE ▽ | SAVED LOCATIONS | SIGN IN | HELP

GOOGLE
MAPS | | SEARCH MAPS | ☐ PRINT ☐ EMAIL

SEARCH THE MAP | FIND BUSINESSES   GET DIRECTIONS

SEARCH RESULTS | REPORT A BUG | SEND FEEDBACK ON INTERNAL ONLY FEATURES | VIEW EXTERIOR VERSION   LINK TO THIS PAGE

EXAMPLE SEARCHES:

GO TO A LOCATION
KANSAS CITY
10 MARKET ST. SAN FRANCISCO

FIND A BUSINESS
HOTELS NEAR LAX
PIZZA

GET DIRECTIONS
JFK TO 350 5TH AVE. NEW YORK
SEATTLE TO 98109

DRAG THE MAP WITH YOUR MOUSE, OR
DOUBLE-CLICK TO ZOOM.
TAKE A TOUR >>

BUSINESS OWNERS:
ADD/EDIT YOUR BUSINESS

ADVERTISERS:
ADVERTISE ON GOOGLE MAPS

STREET VIEW NEW! | TRAFFIC | MAP | SATELLITE | HYBRID

COLUMBUS AVE / BROADWAY ST    STREET VIEW HELP  ☒ FULL-SCREEN ☒

BROADWAY ST
COLUMBUS AVE

SAN
FRANCISCO
BAY

330

320

FIG.3

16

RECEIVE PANORAMA
ID AND VIEWPORT
PARAMETERS ～402

404 ↓

REQUEST XML CONFIG

406 ↓

REQUEST TILES

408 ↓

COMPUTE SHAPES AND LOCATIONS
FOR VIEWPORT ELEMENTS

↓

RENDER VIEWPORT ～410

↓

RECEIVE INPUT ～412

420 ↓

PAN VIEWPORT? —YES→ REQUEST TILES IF NECESSARY ～422

NO ↓ ↓

TRANSLATE AND TRANSFORM TEXTURES OF PANORAMA ～424

426 ↓

430 NOTIFY MAP

ZOOM? —YES→ REQUEST TILES IF NECESSARY ～432

NO ↓ ↓

CHANGE VIEWPORT PARAMETERS ～434

440

LINK TO ANOTHER PANORAMA SELECTED? —YES→ PROCESS TRANSITION BETWEEN PANORAMAS ～442

NO ↓

NOTIFY MAP ～444

FIG.4

```xml
<?XML VERSION="1.0" ENCODING="UTF-8" ?>
<PANORAMA>

<DATA_PROPERTIES IMAGE_WIDTH="17276" IMAGE_HEIGHT="3596"
TILE_WIDTH="512" TILE_HEIGHT="512"

PANO_ID="PANO=0x12345678" NUM_ZOOM_LEVELS="3"

LAT="3.780433" LNG="-122.433800">

<COPYRIGHT>©2007 GOOGLE</COPYRIGHT>
<TEXT>MAIN STREET</TEXT>
<STREET_RANGE>1100-1200</STREET_RANGE> </DATA_PROPERTIES>

<PROJECTION_PROPERTIES VERTICAL_SCALE="1.0" PANO_YAW_DEG="0.0"
TILT_YAW_DEG="0.0" TILT_PITCH_DEG="0.0" />

<ANNOTATION_PROPERTIES HORIZON_HEIGHT_FRACTION="0.5"
ANNOTATIONS_HEIGHT_FRACTION="0.75">

<PANO_LINK YAW_DEG="0.0" PANO_ID="PANO=0x9876543">

<LINK_TEXT>MARKET ST</LINK_TEXT>

</PANO_LINK>

<PANO_LINK YAW_DEG="90.0" PANO_ID="PANO=0x4389299">

<LINK_TEXT>ELM ST</LINK_TEXT>

</PANO_LINK>
</ANNOTATION_PROPERTIES>
</PANORAMA>
```

500

## FIG.5

600

## FIG.6

FIG.7A

FIG.7B

FIG.7C

802 PRECOMPUTE PREIMAGE OF VIEWPORT BY BACKWARD TRANSFORM, DEFINING REGION OF SURFACE

804 PRECOMPUTE TRANSFORM THAT MAPS REGION TO VIEWPORT

PRECOMPUTATION

806 TRANSLATE TEXTURE IN RESPONSE TO USER INPUT

808 DETERMINE PORTION OF TEXTURE THAT INTERSECTS REGION

810 APPLY PRECOMPUTED TRANSFORM TO PORTION OF TEXTURE THAT INTERSECTS WITH REGION

812 RENDER INTO VIEWPORT

FIG.8

FORWARD 901

BACKWARD 902

FIG.9A

FIG.9B

FIG.9C

FIG.10A

FIG.10B

FIG.11

WHERE $h = R \, TAN(\phi_0)$

$y = h \, COS(\theta - \theta_0)$

$\theta_0$     $-\theta_0$

FIG.12

**FIG.13**

**FIG.14**

```
┌─────────────────────────┐
│ RECEIVE  USER  ANNOTATION│
│      TO  PANORAMA  1      │
└─────────────────────────┘
            │
            ▼
┌─────────────────────────┐
│ RECEIVE  USER  ANNOTATION│
│      TO  PANORAMA  2      │
└─────────────────────────┘
            │
            ▼
┌─────────────────────────┐
│  COMPUTE  INTERSECTION  OF│
│     USER  ANNOTATIONS     │
└─────────────────────────┘
            │
            ▼
┌─────────────────────────┐
│    ASSIGN  AND  STORE     │
│  COORDINATES  FOR  USER   │
│        ANNOTATION         │
└─────────────────────────┘
```

**FIG.15**

**EP 3 471 053 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006053271 A1
- US 7158878 B